Europäisches Patentamt

European Patent Office

Office européen des brevets

(19)

(11) Numéro de publication : **0 120 777**
**B1**

(12) ## FASCICULE DE BREVET EUROPÉEN

(45) Date de publication du fascicule du brevet :
09.09.87

(51) Int. Cl.⁴ : **G 02 B 23/08**, F 17 C 13/00

(21) Numéro de dépôt : **84400568.6**

(22) Date de dépôt : **21.03.84**

(54) Dispositif d'observations à l'intérieur d'un réservoir cryogénique en service.

(30) Priorité : **25.03.83 FR 8304967**

(43) Date de publication de la demande :
**03.10.84 Bulletin 84/40**

(45) Mention de la délivrance du brevet :
**09.09.87 Bulletin 87/37**

(84) Etats contractants désignés :
**BE DE GB IT NL**

(56) Documents cités :
**FR-A- 2 198 162**
**GB-A- 819 523**
**PATENTS ABSTRACTS OF JAPAN, vol. 6, no. 195 (P-146)[1073], 5 octobre 1982;**
**CRYOGENICS, vol. 16, no. 7, juillet 1976, page 444, Guildford, GB; A.M. KAGAN et al.: "A device for visual observation of the state of cryogenic liquids"**

(73) Titulaire : **GAZ DE FRANCE**
**23, rue Philibert Delorme**
**F-75017 Paris (FR)**

(72) Inventeur : **Le Diraison, Jean-Claude**
**12 Avenue de la Madonne**
**F-44700 Orvault (FR)**

(74) Mandataire : **Thevenet, Jean-Bruno et al**
**Cabinet BEAU DE LOMENIE 55 rue d'Amsterdam**
**F-75008 Paris (FR)**

## Description

La présente invention concerne un dispositif d'observation et/ou d'éclairage de l'intérieur d'un réservoir cryogénique en service contenant un gaz combustible liquéfié à basse température.

La façon dont sont construits les réservoirs cryogéniques ne permet pas, avec des moyens conventionnels, d'examiner de l'extérieur, l'intérieur de la cuve contenant le liquide à basse température.

Or, il s'avère important de vérifier le bon état des accessoires installés dans le réservoir, tels que les clapets de fond ou les appareils de mesure, ainsi que le bon état des parois. Ceci n'est réalisé, de façon traditionnelle, qu'après vidage du réservoir, balayage par un gaz inerte, puis éventuellement par de l'air, jusqu'à élimination totale des gaz combustibles et réchauffement de l'ensemble du réservoir afin de permettre une visite de la cuve interne par un observateur équipé, le cas échéant, d'un appareil autonome de respiration si le réservoir est rempli de gaz inerte.

Les opérations sont longues, coûteuses et non sans danger pour la tenue des ouvrages, en particulier pour ceux qui utilisent du béton au contact direct du gaz naturel liquéfié. Elles sont impossibles pour un réservoir en sol gelé, qui, par nature, ne peut pas être réchauffé.

La présente invention vise précisément à remédier aux inconvénients précités et à permettre l'observation de l'intérieur d'un réservoir cryogénique en service normal, c'est-à-dire contenant un liquide à basse température, surmonté de sa vapeur.

L'invention vise ainsi à permettre une observation non seulement de la cuve elle-même mais également de la surface libre du liquide, notamment au remplissage, pendant le soutirage, en période de brassage ou de recirculation.

L'invention a ainsi pour but de permettre une observation à l'intérieur d'un réservoir sans qu'il soit nécessaire à un observateur de pénétrer dans la cuve.

Ces buts sont atteints grâce à un dispositif d'observation et/ou d'éclairage qui selon l'invention, comprend un tube fermé de façon étanche et muni d'au moins une partie transparente formant hublot, et de moyens de fixations dans un orifice ou un tronçon de canalisation prévu dans la paroi du réservoir à observer, et le tube comprenant, d'une part, des moyens d'observation et/ou d'éclairage disposés dans le tube au voisinage de la partie transparente, d'autre part, des moyens d'introduction d'un gaz sec et inerte à une température supérieure à celle de la phase gazeuse du produit présent dans le réservoir, et des moyens d'évacuation du gaz inerte.

De préférence, les moyens d'introduction d'un gaz inerte comprennent une canalisation débouchant au voisinage des moyens d'éclairage et/ou d'observation et les moyens d'évacuation du gaz inerte sont disposés au voisinage de l'extrémité supérieure du tube étanche.

Le gaz inerte peut être constitué par de l'azote, en particulier par de l'azote liquide regazéifié.

Le gaz inerte et sec est introduit dans le tube étanche à une température égale ou supérieure à la température ambiante externe au réservoir.

Le dispositif selon l'invention permet ainsi d'introduire dans le ciel gazeux du réservoir un appareil d'observation tel qu'appareil photo, endoscope, caméra de cinéma ou de télévision, et de créer autour de cet appareil les conditions nécessaires à son fonctionnement grâce à une température suffisante, une absence d'humidité, la possibilité d'utiliser des moyens d'éclairage introduits dans le dispositif lui-même ou dans d'autres dispositifs similaires présents dans la cuve, tout en assurant la sécurité de l'installation grâce à l'étanchéité du tube monté sur le réservoir et à la présence du gaz inerte qui élimine tout risque de présence de gaz combustible dans les zones sous tension électrique.

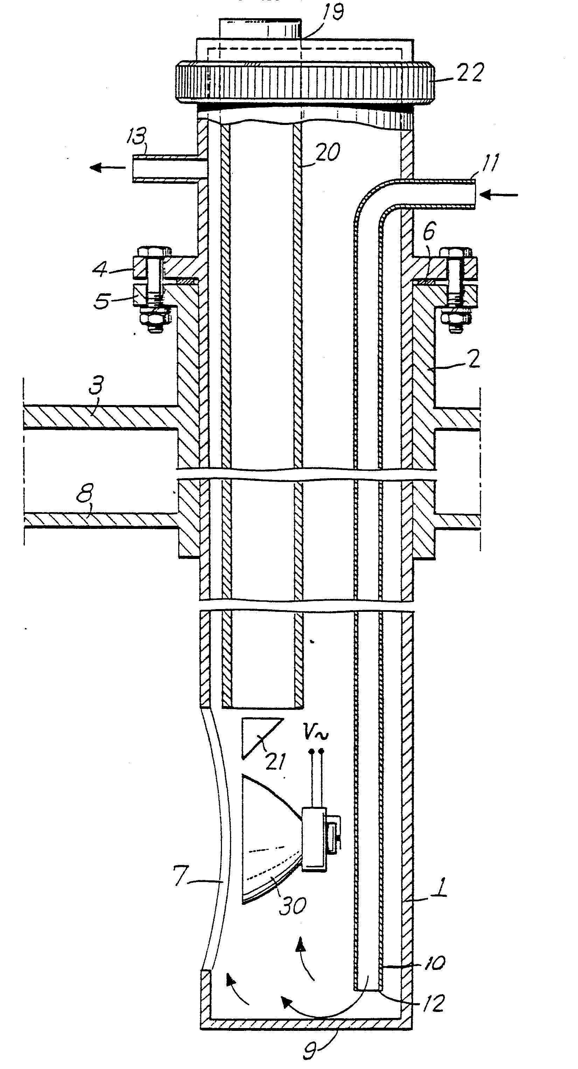

D'autres caractéristiques et avantages ressortiront de la description qui fait suite d'un mode particulier de réalisation de l'invention, donné uniquement à titre d'exemple, en référence au dessin annexé où la figure unique représente une vue schématique en coupe axiale du dispositif selon l'invention.

Dans l'exemple représenté sur la figure, on voit un tube 1 composé d'un ou plusieurs tronçons assemblés bout à bout et fermés par un fond à la partie inférieure 9 du tube. Le tube 1 comporte une partie transparente 7 formant hublot, étanche au gaz, réalisée dans la paroi latérale du tube 1 au voisinage du fond 9 pour constituer une zone d'observation. D'autres parties transparentes similaires peuvent être réalisées dans la paroi latérale du tube 1 à divers niveaux au-dessus du fond 9. Le fond 9 du tube 1 peut également être lui-même réalisé en matériau transparent, et être constitué par exemple d'une verrine formant également une zone d'observation.

Le tube 1 est monté dans une tuyauterie 2 solidaire du dôme 3 du réservoir qui surmonte le toit 3 de la cuve interne, et traversant ledit toit. Le tube 1 peut être monté à poste fixe dans la tuyauterie 2 lors de la construction de la cuve ou être amovible. Dans ce dernier cas, la tuyauterie 2 débouchant sur le toit 3 est munie d'une vanne d'isolation à passage intégral et le tube 1 est introduit dans la canalisation après décompression de la phase gazeuse présente dans la cuve. L'extrémité supérieure du tube 1 est munie d'une bride 4 qui permet une fixation, par boulons, sur la bride 5 équipant l'extrémité supérieure de la tuyauterie 2 pré-existante. Un joint 6 entre brides assure l'étanchéité. Le tube 1 pourrait aussi être monté à l'aide d'une bride flottante autorisant une rotation et un coulissement du tube.

Un ensemble mobile d'éclairage 30 et d'observation 20, 21 est introduit par la partie supérieure du tube 1 à travers une ouverture obturable 19.

Les moyens d'observation 21 et d'éclairage 30 sont descendus à hauteur de la partie transparente 7 du tube 1. Un joint assure l'étanchéité de la traversée de l'ouverture 19 par la partie de l'ensemble d'éclairage et d'observation qui débouche à l'extérieur du tube 1. Une fois en place, le tube 1 constitue ainsi une enceinte étanche qui isole l'ensemble d'éclairage 30 et d'observation 20, 21 de la phase gazeuse du produit stocké dans la cuve de stockage.

Les moyens d'éclairage peuvent être constitués par une source lumineuse à alimentation électrique, munie d'un réflecteur et descendue dans le tube 1 jusqu'au voisinage de la fenêtre d'observation constituée par la partie transparente 7 de la paroi du tube. Naturellement, plusieurs sources lumineuses peuvent être utilisées simultanément avec plusieurs fenêtres 7 d'un même tube 1, ou une source lumineuse unique peut être descendue successivement en regard des différentes fenêtres 7.

Les moyens d'observation peuvent comprendre un tube endoscope 20 associé à un prisme inclinable 21 dont l'inclinaison est commandée par une bague 22 placée à la partie supérieure du tube 1, et à un objectif, ou un appareil de prise de vue, tel qu'un appareil photo, ou une caméra vidéo.

En fait, tout moyen classique d'observation ou d'éclairage peut être introduit dans le tube étanche 1 selon l'invention, bien que le tube 1 soit plongé dans un milieu froid et combustible. En effet, selon l'invention, le système d'éclairage et l'appareil d'observation sont tous deux placés dans une bulle de gaz chaud, ou relativement chaud, sec et inerte. Pour ce faire, le tube 1 est équipé d'un tube 10 d'injection de gaz inerte et sec, éventuellement chauffé, ou à température ambiante, qui peut être par exemple constitué par de l'azote. Le gaz inerte est introduit à la partie supérieure du tube 1 par l'entrée 11 de la canalisation 10, et débouche à la partie inférieure du tube 1, à hauteur de la zone transparente 7 où sont placés les moyens d'éclairage et d'observation. Un tuyau de sortie 13, placé à la partie supérieure du tube 1 assure l'évacuation du gaz inerte, après balayage de l'intérieur du tube 1, à l'atmosphère ou dans un collecteur.

Le balayage de l'intérieur du tube 1 à l'aide d'un gaz inerte, sec et à une température voisine de la température ambiante ou un peu supérieure, assure plusieurs fonctions. Il permet de rendre inerte l'intérieur du tube étanche 1 et ainsi d'alimenter en toute sécurité en courant électrique basse tension les moyens d'éclairage ou d'observation. L'alimentation électrique peut ainsi être amenée jusqu'au fond du tube 1 placé au coeur de la cuve à étudier et les moyens d'éclairage notamment peuvent être relativement puissants et beaucoup plus efficaces que des moyens d'éclairement indirects utilisant par exemple des fibres optiques.

Le balayage à l'intérieur du tube étanche 1 permet aussi de sécher le tube 1 et l'appareil d'observation afin d'éviter la formation de givre sur les hublots, la verrine et l'objectif, du fait de la très basse température (qui peut atteindre environ — 160 °C) du milieu dans lequel est plongé le tube 1.

Le balayage à l'intérieur du tube étanche 1 a encore pour rôle de réchauffer la zone d'observation pour éviter la détérioration par le froid de l'appareil d'observation, en particulier de son objectif.

Dans le cas où le tube 1 n'est pas monté à poste fixe dès la construction, la mise en oeuvre de celui-ci pour réaliser une observation de l'intérieur d'une cuve est la suivante. On pratique d'abord une décompression de la phase gazeuse afin de limiter l'échappement de gaz de la cuve lors de l'introduction du tube 1 dans la tuyauterie 2. Après introduction du tube 1 et assemblage des brides 4, 5, et retour éventuel à la pression de service du réservoir, on pratique l'injection et la circulation de gaz inerte dans le tube étanche 1 qui est obturé à sa partie supérieure. Après ouverture de l'orifice 19 à la partie supérieure du tube étanche 1 et, introduction de façon étanche de l'ensemble mobile d'éclairage et d'observation 20, 30, la circulation de gaz inerte est maintenue pendant toute la durée de l'observation.

Dans certains cas, plusieurs dispositifs similaires à tube étanche 1 formant sas, avec zone transparente 7, balayé par un gaz inerte peuvent être utilisés conjointement dans une même cuve et être introduits dans des tuyauteries 2 différentes en attente. Certains de ces dispositifs peuvent par exemple, n'avoir qu'un rôle d'éclairage de l'intérieur de la cuve et ne comporter que des moyens d'éclairage, les moyens d'observation étant disposés dans un seul tube principal d'observation 1 dont la réalisation est du même type.

## Revendications

1. Dispositif d'observation et/ou d'éclairage de l'intérieur d'un réservoir cryogénique en service contenant un gaz combustible liquéfié à basse température, caractérisé en ce qu'il comprend un tube (1) fermé de façon étanche et muni d'au moins une partie transparente (7) formant hublot, et de moyens (4, 5) de fixation dans un orifice ou un tronçon de canalisation (2) prévu dans la paroi (3, 8) du réservoir à observer, et en ce que le tube (1) comprend, d'une part, des moyens d'observations (20, 21) et/ou d'éclairage (30) disposés dans le tube (1) au voisinage de la partie transparente (7), d'autre part, des moyens (11, 12) d'introduction d'un gaz sec et inerte à une température supérieure à celle de la phase gazeuse du produit présent dans le réservoir, et des moyens (13) d'évacuation du gaz inerte.

2. Dispositif selon la revendication 1, caractérisé en ce que les moyens (11, 12) d'introduction d'un gaz inerte comprennent une canalisation (11, 12) débouchant au voisinage des moyens d'éclairage (30) et/ou d'observation (20, 21) et en ce que les moyens (13) d'évacuation du gaz inerte sont disposés au voisinage de l'extrémité supérieure du tube étanche (1).

3. Dispositif selon la revendication 1 ou la revendication 2, caractérisé en ce que le gaz inerte est constitué par de l'azote.

4. Dispositif selon la revendication 3, caractérisé en ce que le gaz inerte et sec est constitué par de l'azote liquide regazéifié.

5. Dispositif selon l'une quelconque des revendications 1 à 4, caractérisé en ce que le gaz inerte et sec est introduit dans le tube étanche à une température égale ou supérieure à la température ambiante externe au réservoir.

6. Dispositif selon l'une quelconque des revendications 1 à 5, caractérisé en ce que les moyens d'éclairage (30) comprennent des sources lumineuses électriques constituées par des lampes à incandescence ou similaires (30).

7. Dispositif selon l'une quelconque des revendications 1 à 6, caractérisé en ce que les moyens d'observation (20, 21) comprennent un endoscope (20) ou des moyens de prise de vue.

8. Dispositif selon l'une quelconque des revendications 1 à 7, caractérisé en ce que le tube étanche (1) est monté sur le réservoir à l'aide d'une bride flottante autorisant un coulissement axial et une rotation du tube (1) par rapport au réservoir.

9. Dispositif selon l'une quelconque des revendications 1 à 8, caractérisé en ce qu'il comprend plusieurs tubes étanches (1) fixés sur la paroi du réservoir, munis d'une partie transparente (7) et alimentés en gaz inerte et sec à une température très supérieure à celle de la phase gazeuse du produit présent dans le réservoir, et en ce que certains tubes (1) sont munis exclusivement de moyens d'éclairage (30) tandis qu'au moins un tube est muni de moyens d'observation (20, 21).

## Claims

1. A device for observing and/or illuminating the interior of a cryogenic tank in service which contains a liquefied combustible gas at low temperature, characterized in that it comprises a hermetically closed tube (1) provided with at least one transparent part (7) forming a porthole, and with means (4, 5) for securing it in an orifice or a section of pipe (2) provided in the wall (3, 8) of the tank to be observed, and in that the tube (1) comprises, on the one hand, observation (20, 21) and/or illuminating (30) means disposed in the tube (1) in the vicinity of the transparent part (7), on the other hand, means (11, 12) for introducing a dry, inert gas at a temperature higher than that of the gaseous phase of the product present in the tank, and means (13) for evacuating the inert gas.

2. Device according to claim 1, characterized in that the means (11, 12) for introducing an inert gas comprise a pipe (11, 12) opening out in the vicinity of the illuminating (30) and/or observation (20, 21) means and in that the inert gas evacuating means (13) are disposed near the upper end of the air-tight tube (1).

3. Device according to claim 1 or claim 2, characterized in that the inert gas is constituted by nitrogen.

4. Device according to claim 3, characterized in that the dry inert gas is constituted by regasified liquid nitrogen.

5. Device according to claims 1 to 4, characterized in that the dry, inert gas is introduced into the air-tight tube at a temperature equal to or greater than the ambient temperature outside the tank.

6. Device according to any one of claims 1 to 5, characterized in that the illuminating means (30) comprise electric light sources constituted by incandescent lamps or the like (30).

7. Device according to any one of claims 1 to 6, characterized in that the observation means (20, 21) comprise an endoscope (20) or filming means.

8. Device according to any one of claims 1 to 7, characterized in that the air-tight tube (1) is mounted on the tank with the aid of a loose flange allowing axial slide and rotation of the tube (1) with respect to the tank.

9. Device according to any one of claims 1 to 8, characterized in that it comprises a plurality of air-tight tubes (1) fixed on the wall of the tank, provided with a transparent part (7) and supplied with dry inert gas at a temperature much higher than that of the gaseous phase of the product present in the tank, and in that certain tubes (1) are provided exclusively with illuminating means whilst at least one tube is provided with observation means (20, 21).

## Patentansprüche

1. Vorrichtung zum Beobachten und Beleuchten des Inneren eines cryogenen Behälters während des Betriebes, der ein bei niedrigen Temperaturen verflüssigtes brennbares Gas enthält, gekennzeichnet durch ein dicht verschlossenes Rohr (1), das mit mindestens einem transparenten Bereich (7) versehen ist, der ein Sichtfenster bildet und durch Befestigungsmittel in einer Öffnung, wo ein Leitungsabschnitt (2) in der Wandung (3, 8) des zu beobachtenden Behälters vorgesehen ist, wobei das Rohr (1) einerseits Beobachtungsorgane (20, 21) und/oder Beleuchtungsmittel (30) aufweist, die in dem Rohr (1) in der Nähe des transparenten Bereiches (7) angeordnet sind und andererseits Mittel (11, 12) zum Einführen eines trockenen und inerten Gases mit einer Temperatur, die größer als die der Gasphase des sich in dem Behälter befindlichen Stoffes ist, und Mittel (13) zum Abpumpen des inerten Gases aufweist.

2. Vorrichtung nach Anspruch 1, dadurch gekennzeichnet, daß die Mittel (11, 12) zum Einführen des inerten Gases ein Leitungssystem (11, 12) aufweisen, das in der Nähe der Beleuchtungsorgane (30) und/oder der Beobachtungsmittel (20, 21) mündet und dadurch, daß die Mittel (13) zum Abpumpen des inerten Gases in der Nähe des oberen Endes des dichten Rohrs (1) angeordnet sind.

3. Vorrichtung nach Anspruch 1 oder 2, dadurch gekennzeichnet, daß das inerte Gas Stickstoff ist.

4. Vorrichtung nach Anspruch 3, dadurch gekennzeichnet, daß das inerte und trockene Gas aus wiedervergastem flüssigen Stickstoff besteht.

5. Vorrichtung nach einem der Ansprüche 1-4, dadurch gekennzeichnet, daß das inerte und trockene Gas in das dichte Rohr bei einer Temperatur eingeführt wird, die größer oder gleich der Umgebungstemperatur außerhalb des Behälters ist.

6. Vorrichtung nach einem der Ansprüche 1-5, dadurch gekennzeichnet, daß die Beleuchtungsmittel (30) elektrische Lichtquellen umfassen, die aus Weiß-Lichtquellen oder ähnlichem (30) bestehen.

7. Vorrichtung nach einem der Ansprüche 1-6, dadurch gekennzeichnet, daß die Beobachtungsmittel (20, 21) ein Endoskop (20) oder Aufnahmemittel aufweisen.

8. Vorrichtung nach einem der Ansprüche 1-7, dadurch gekennzeichnet, daß das dichte Rohr (1) auf dem Behälter mittels eines schwimmenden Flansches befestigt ist, der ein axiales Gleiten und ein Drehen des Rohres (1) bezüglich des Behälters zuläßt.

9. Vorrichtung nach einem der Ansprüche 1-8, dadurch gekennzeichnet, daß sie mehrere dichte Rohre (1) aufweist, die an den Wandungen des Behälters befestigt und mit einem transparenten Bereich (7) versehen sind und mit inertem und trockenem Gas, einer Temperatur, die sehr viel höher als die der Gasphase des sich in dem Behälter befindlichen Gases ist, gespeist werden und dadurch, daß bestimmte Rohre (1) ausschließlich mit Beleuchtungsmitteln (30) versehen sind, wohingegen mindestens ein Rohr mit Beobachtungsmitteln (20, 21) versehen ist.